# EUROPEAN PATENT APPLICATION

(11) **EP 2 061 186 A1**
(43) Date of publication of application: **20.05.2009**
(21) Application number: 07022124.7
(22) Date of filing: 14.11.2007
(51) Int. Cl.: H04L 12/24

(54) **Method and device for determining a history of a connection in a newtwork and communication system comprising such device**

(71) Applicant: Nokia Siemens Networks Oy, 02610 Espoo (FI)
(72) Inventor: Frantz, Michael, 81737 München (DE); Stilling, Bernd, 81379 München (DE)
(74) Representative: Bruglachner, Thomas E.

(57) **Abstract**

A method and a device are provided for determining a progression, in particular a history, of a connection in a network by identifying at least one trigger for re-routing of said connection, wherein the network at least partially supports pre-emption. Furthermore, a communication system is provided comprising such device.

## Description

The invention relates to a method and to a device for determining a history of a connection in a network and to a communication system comprising such a device.

For meshed backbone and regional networks, an Automatically Switched Optical Network (ASON) is used to save
(i) OPEX
   by shifting configuration tasks to the network itself, i.e. to an ASON control plane; and
(ii) CAPEX
   by utilizing dynamic restoration mechanisms supported by ASON.

These meshed ASON domains are embedded in an overall transport network, but need to be managed differently due to the fact that paths to be configured in the network are set up via the ASON control plane, which is a functionality of network elements themselves, and not via the central TMN system.

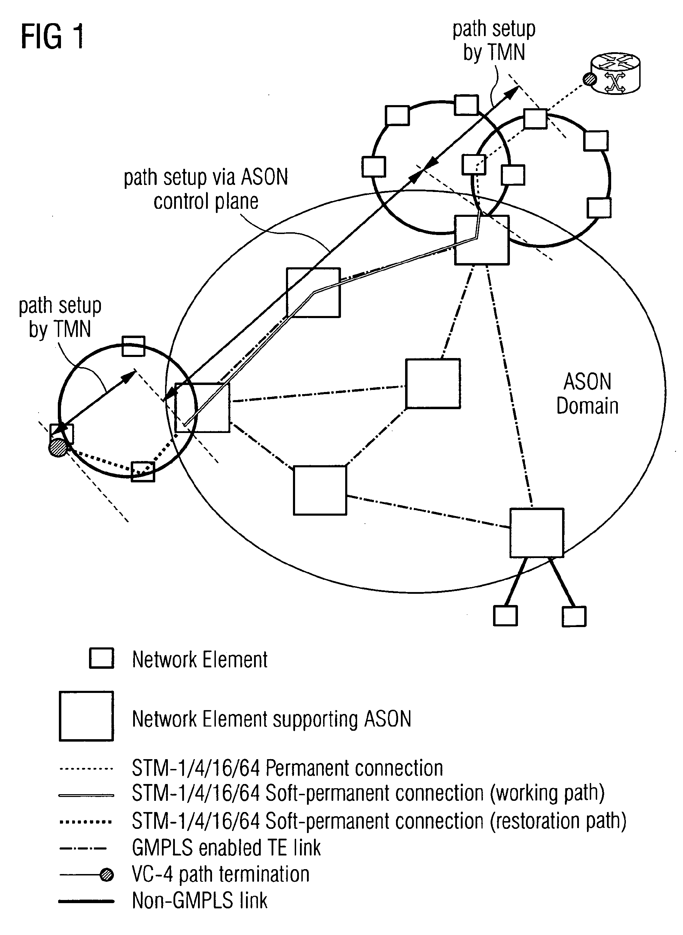

As depicted in **Fig.1****,** the network elements of an ASON domain are used in a meshed network.

For setting up a customer service, an end-to-end (e2e) path is configured through the network. Hence, the TMN-system configures an end-to-end path comprising a path segment that is initialized via the ASON control plane and thus in the network elements of the ASON domain. The TMN system directly configures the corresponding cross connections (CCs) in the network elements that are not part of the ASON domain.

Hence, the TMN system manages the complete transport network comprising
- network resources which are to be configured by the TMN system and
- network resources which are to be configured via the ASON control plane.

In case of a failure in the ASON network, the control plane of the network element automatically re-routes the path segments within the ASON domain (LSP), i.e. changes the routes (or segments) of the LSP.

Due to pre-emption mechanisms in the ASON network, several LSPs may be re-routed, even such LSPs that are not directly affected by the network failure. Such pre-emption may occur in several cycles, i.e. an already pre-empted LSP can initiate pre-emption to another LSP and so on.

The LSPs may be set to a so-called "revertive" mode. In such case, the respective LSP may switch back to its original route after the network failure(s) are corrected.

In traditional transport networks, the failure analysis for a path is supported by the Network Management System (NMS) by identifying the route of a path and the network resources used. For these network resources, the NMS performs an automatic correlation of all failures (network alarms) regarding the respective path or connection. The result is available as a summary in one state (alarm state) and as a state list (alarm list) on request.

For transport networks which utilizing, e.g., the ASON technology, this information is not available, in particular because
- the route of a path is automatically changed by the network itself when the LSP is re-routed;
- an LSP may have changed the route even if it was not directly affected by the network failure (e.g., due to pre-emption).

Hence, there is no support for failure analysis in the NMS provided by existing concepts, in particular neither for paths which span the ASON domain only, nor for paths which traverse an ASON domain as depicted in Fig.1 above.

The **problem** to be solved is to overcome the disadvantages as set forth above and in particular to provide an efficient and reliable approach to determine a history of a connection and in particular a root reason that led to re-routing(s) of the connection.

This problem is solved according to the features of the independent claims. Further embodiments result from the depending claims.

In order to overcome this problem, a method is provided for determining a progression, in particular a history, of a connection in a network by identifying at least one trigger for re-routing of said connection, wherein the network at least partially supports pre-emption.

Advantageously, at least a portion of said network may support a pre-emption mechanism.

The network may in particular comprise at least one of the following:
- an optical network;
- an IP network;
- an Ethernet;
- an Automatic Switched Transport Network (ASTN).

The optical network may in particular be or comprise an Automatically Switched Optical Network (ASON).

Said connection may comprise path, a segment thereof or any portion of a connection, in particular between two network elements or network nodes.

Advantageously, with the approach provided the user does no longer have to manually investigate any complex history in particular of re-routed LSPs to be able to identify why the route of a LSP has (originally) been changed or which changes are affected by a failure caused in particular regarding the ASON network domain. This may especially be useful as any manual investigation however may easily become impossible due to the huge amounts of changes possible, e.g., based on failures and/or pre-emption throughout the network.

In an embodiment, said trigger comprises:
- an error;
- an alarm;
- a pre-emption.

An pre-emption of an actual connection in particular may be based on a re-routing of a different connection. For such pre-emption the actual connection does not have to comprise a defective link or segment in order to be re-routed.

In another embodiment, said connection comprises a label switched path (LSP).

In a further embodiment, said method is run for several connections of the network.

This allows to provide and/or gather an extensive picture of the network situation based on different triggers for re-routing. Such picture can be utilized for several purposes, in particular for optimizing the network and hence to increase its efficiency.

It is also an embodiment that the method comprises the following steps:
- a previous route for the connection is determined;
- the triggers for re-routing are determined and stored.

Pursuant to another embodiment, in case of pre-emption a history of paths is determined that utilize at least a portion of the connection.

According to an embodiment, the approach provided is utilized for fault analysis and/or for traffic optimization and/or for route optimization.

According to another embodiment, the method is utilized by a Network Management System (NMS).

The problem stated above is also solved by a device for determining a history of a connection in a network comprising a processor unit that is equipped and/or arranged such that the method as described herein is executable on said processor unit.

According to an embodiment, the device is a communication device, in particular a network element and/or a device comprising a NMS functionality.

The problem stated supra is further solved by a communication system comprising the device as described herein.

Embodiments of the invention are shown and illustrated in the following figures:
- Fig.2: shows an example of a meshed network structure comprising six network elements and three Label Switched Paths (LSPs);
- Fig.3: shows the network structure according to Fig.2 with a network failure on the link between the first network element and the second network element;
- Fig.4: shows the network structure of Fig.3 with an additional network failure on the link between the forth network element and the sixth network element;
- Fig.5: shows a sequence chart for a process determining a re-routing history of a LSP A.

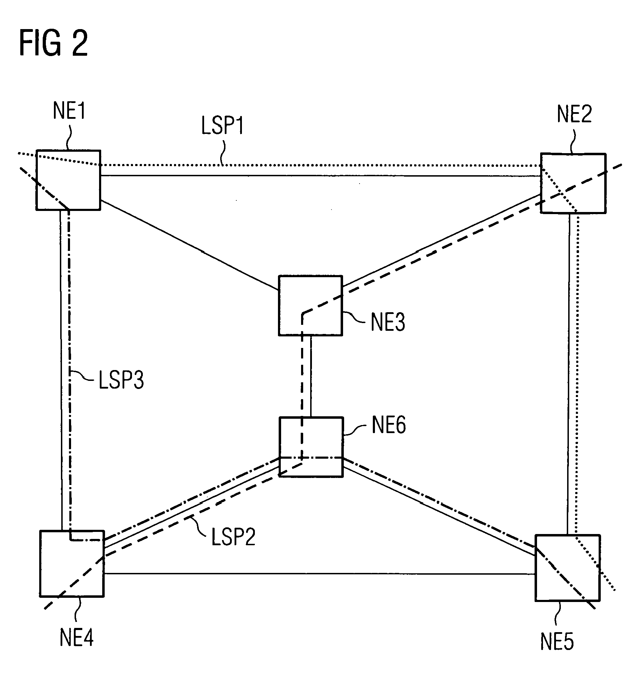

Fig.2 to Fig.4 each show an ASON and various triggers that may lead to re-routing. It is visualized how complicated a history of re-routing for each particular path can become due to pre-emption, i.e., change of routes that are not immediately connected to a failure within a particular segment.

**Fig.2** shows network elements NE1 to NE6, that are connected with one another according to the following table:

| | |
|---|---|
| NE... | is further connected to... |
| NE1 | NE2, NE3, NE4 |
| NE2 | NE3, NE5 |
| NE3 | NE6 |
| NE4 | NE5, NE6 |
| NE5 | NE6 |

Fig.2 comprises the following LSPs that are configured at a time 1 as follows:

| | |
|---|---|
| LSP | via network elements |
| LSP1 | NE1 - NE2 - NE5 |
| LSP2 | NE4 - NE6 - NE3 - NE2 |
| LSP3 | NE1 - NE4 - NE6 - NE5 |

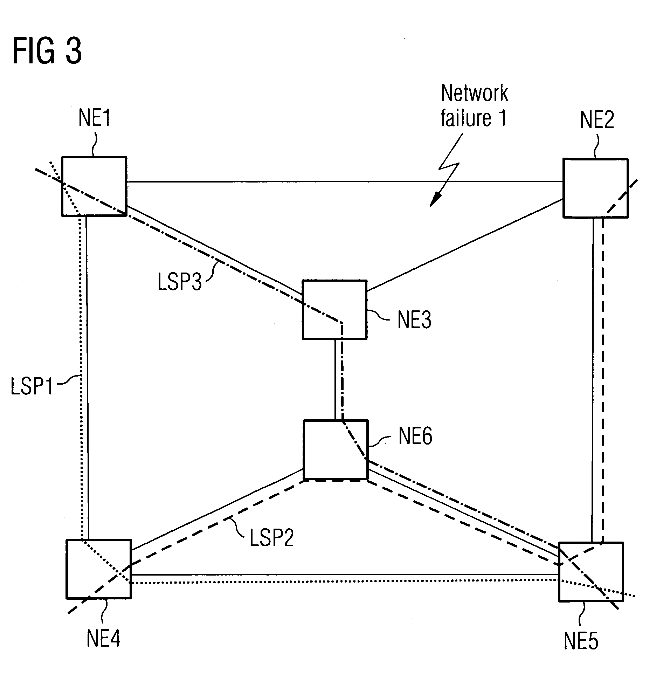

**Fig.3** is based on the network structure of Fig.2. A network failure occurred at a time 2 on the link between NE1 and NE2. The LSPs are re-routed as follows:

| | |
|---|---|
| LSP | via network elements |
| LSP1 | NE1 - **NE4 -** NE5 |
| LSP2 | NE4 - NE6 - **NE5 -** NE2 |
| LSP3 | NE1 - **NE3 -** NE6 - NE5 |

It is to be noted that the defective link between NE1 and NE2 directly affects LSP1 of Fig.2 only. Re-routing of LSP2 and LSP3 of Fig.3 is due to pre-emption as none of these LSPs comprises the segment between NE1 and NE2 and hence neither LSP2 nor LSP3 is directly affected by the link failure.

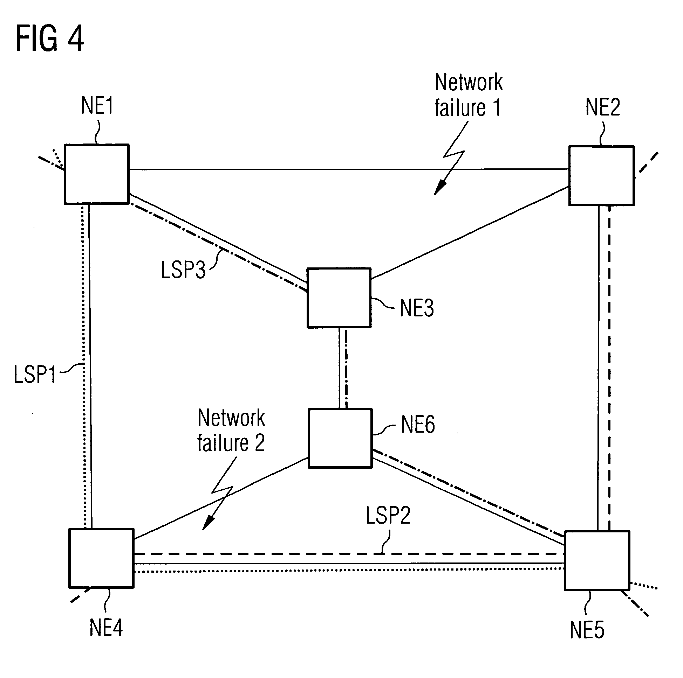

Next, as shown in **Fig.4****,** a subsequent link failure occurs between NE4 and NE6 at a time 3. Re-routing leads to the following LSPs:

| | |
|---|---|
| LSP | via network elements |
| LSP1 | NE1 - NE4 - NE5 |
| LSP2 | **NE4 - NE5 -** NE2 |
| LSP3 | NE1 - NE3 - NE6 - NE5 |

Compared to the LSPs of Fig.3, only LSP2 has been changed. In this case, no pre-emption of another (not directly affected) path is initiated.

According to this example, in a real network comprising thousands of LSPs automatic re-routing due to various reasons (e.g., failure and/or pre-emption) may lead to a long and complex history of changes.

The approach provided herewith in particular relates to the following aspects and/or advantages:
1. Route changes of the LSPs in the ASON domain are automatically stored.
2. The route history back can be traced back to the initial route.
3. It can be determined whether the re-route was caused by a network failure or due to pre-emption.
4. Alarms are correlated to the used network resources within a time period to be considered for the re-routing process in the ASON network for one LSP.
5. Dependencies to other LSPs are resolved which led to re-routing due to pre-emption by the correlation of network resources within a given time period.
6. All reasons can be summed up or put together that contributed to the current state, i.e. the current route or connection.
7. User selected criteria can be applied in order to sort the causes or triggers and hence to make the overall analysis more effective.

According to the approach provided, the route history for a LSP (in particular each LSP of interest) may be analyzed and it can be determined whether re-routing of each particular LSP was caused by a network failure that immediately affected a segment of the LSP leading to an alarm notification within a given period of time.

In addition, the concept also considers the fact that the current route may not only be caused by a single failure or by pre-emption, but also by multiple failures or by multiple pre-emption events. That is, multiple network alarms and multiple pre-emption for different LSPs (that may be caused by independent network alarms) may be correlated in order to allow a complete analysis of the current network state, in particular of the current state of each LSP of the network.

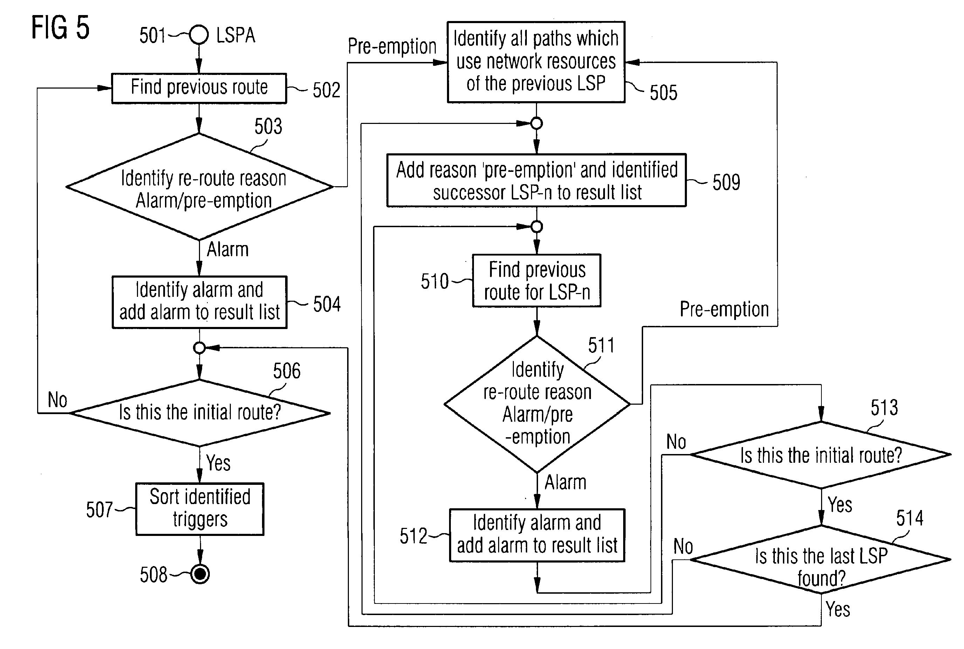

One embodiment is shown by the sequence chart of Fig.5 depicting as how to find the re-routing history for a LSP A.

At a start 501, LSP A is chosen for determining its re-routing history. However, the approach provided can be processed for each LSP of interest.

In a step 502, a previous route of the LSP A is determined and in a step 503 the reason or trigger for such re-routing is identified. If the trigger is an alarm (e.g., due to a link failure) it is branched to a step 504, if the trigger is pre-emption, it is branched to a step 505.

Regarding step 503 it is noted that a control plane may deliver the information, if LSP A was rerouted due to a network failure or because of pre-emption. However, such information may also be determined via the NMS by identifying network failures within a defined time period in case the control plane does not support or is not able to provide such information.

In step 504, the alarm is identified and added to a result list. The system may identify the network resources for this particular route (LSP A) and it may correlate all alarms for these resources within a re-routing time period (Δt1), i.e. the time period which the ASON network may require for re-routing purposes. If one or several alarms are identified, the alarm(s) are added to a root cause list. If no alarm is identified, the time period is expanded and the correlation is repeated for this expanded time period (Δt2). Δt1 and Δt2 are preferably configurable via the NMS. An alternative approach would be that the NMS also evaluates additional information from the control plane in case such feature is supported.

In a subsequent step 506 it is determined whether or not the initial route has been found. In the affirmative, it is branched to a step 507. If the initial route has not yet been found it is branched to the step 502.
It is noted that in step 506, all changes to LSP A shall be considered in order to give a user or operator a complete picture of all changes in the network that are connected to LSP A.

The triggers or reasons identified may advantageously be sorted in step 507 according to different criteria such that the user may easily obtain the history of network changes.

The process ends at a subsequent step 508.

In case of pre-emption, starting with step 505 all paths are determined that use network resources of the previous LSP. Advantageously, in order to identify the LSPs, a point of time is considered when the previous LSP using the network resource was pre-empted.

In a subsequent step 509 the reason or trigger "pre-emption" is added to the result list together or in association with a successor LSP-n.

In a subsequent step 510, the previous route for LSP-n is determined. Thereinafter, in a step 511, the reason for re-routing is determined (similar to step 503). If the reason is pre-emption, it is branched to step 505, otherwise, in case of "alarm" being the trigger, it is branched to a subsequent step 512 (that is similar to step 504).

In a subsequent step 513 (similar to step 506) it is checked whether the initial route is found. If this is not the case, it is branched to step 510 and in the affirmative, a subsequent step 514 is processed.

In step 514 it is checked whether the actual LSP is the last LSP found. If this is not the case, it is branched to step 509 and in the affirmative, it is branched to step 506. Due to the fact that several LSPs can use network resources of the pre-empted LSP, all LSPs may have to be investigated.

For illustration purposes, the approach of Fig.5 applied to the example according to Fig.2, Fig.3 and Fig.4 can be summarized as follows:
a. For LSP2 at time 2:
   - Time 2 + Δt2:
      LSP2 is rerouted due to pre-emption by LSP3
   - Time 2 + Δt1:
      LSP3 is rerouted due to a pre-emption by LSP1
   - Time 2:
      LSP1 is rerouted due to a network failure detected for the link between NE1, card x, port y and NE2, card a, port b.
b. For LSP2 at time 3:
   - Time 2 + Δt2:
      LSP2 is rerouted due to a pre-emption by LSP3
   - Time 2 + Δt1:
      LSP3 is rerouted due to a pre-emption by LSP1
   - Time 2:
      LSP1 rerouted due to a network failure detected for the link between NE1, card x, port y and NE2, card a, port b.
   - Time 3:
      LSP2 rerouted due to a network failure detected for the link between NE4, card z, port w and NE6, card f, port q.

In addition, LSPs that are affected by an alarm can be determined by a similar concept. This applies as well if several pre-emption events occurred.

### Further Advantages:

The concept provided in particular comprises the following advantages:
- It can be distinguished whether the re-route was caused by a network failure or whether it was due to pre-emption.
- The concept automatically correlates alarms to network resources used within a given time period. This can be utilized for the re-routing process in the ASON network per LSP in combination with tracing the route(s) history.
- Network failures are considered when tracing the history of a particular path. Such network failures may only contribute indirectly to the re-route of a LSP.
- The root triggers for any network adaption (re-routing) can be determined and considered for increasing the overall network's efficiency and/or performance.
- The NMS can support failure analysis for paths which span only the ASON domain and for paths which traverse the ASON domain.
- Failure analysis can be supported by the NMS for all reasons with an impact on the actual LSP routes, i.e. network failures and pre-emption causes.
- Network failures can be classified, e.g., they can be prioritized for fault repair purposes. This enables the user to decide which network failure is of high importance and needs to be fixed in order to guarantee that the ASON network has enough free network resources for future restoration processes.
- The user can obtain a route history for LSPs.

### Abbreviations:

| | |
|---|---|
| ASON | Automatically Switched Optical Network |
| ASON control plane | Distributed intelligence deployed within the network elements of the ASON controlling establishment and maintenance of connections. |
| Call | G.8081: An association between endpoints that supports an instance of a service. |
| CAPEX | CAPital EXpenditure |
| CC | Cross Connection |
| E2E | End-to-End |
| GUI | Graphical User Interface |
| Logical network configuration | Any configuration which is configured in the network element. |
| LSP | Label Switched Path (a connection within the ASON network). |
| NE | Network Element |
| Network Resource | Any resource which is installed physically in the network, e.g., NE or card. |
| OPEX | OPerational EXpenditure |
| Path | Set of NEs, links and/or ports traversed by routes |
| Preemption | RFC2751: Network nodes which support preemption should consider priorities to preempt some previously admitted low-priority LSP in order to make room for a newer, high-priority LSP. Each pre-empted LSP again may preempt other LSPs when it is re-routed. |
| PT | Physical trail (Physical connection between two adjacent NEs) |
| Route | A sequence of transport resources that are used by the control plane to create a network connection. |
| Service | An entity that establishes a relationship between a customer and the network resources used. It usually contains a reference to the customer, the network elements and/or the links, and a quality of service (QoS). Each service has one or several dedicated paths assigned thereto. |
| STM | Synchronous Transfer Mode |
| TP | Termination Point |
| TMN system | It allows the operator to configure end to end services, affecting several network elements at a time. |
| VC | Virtual Container, i.e. VC4, VC3, VC2 and VC12 |

## Claims

1. A method for determining a history of a connection in a network by identifying at least one trigger for re-routing of said connection, wherein the network at least partially supports pre-emption.

2. The method according to claim 1, wherein said trigger comprises:
- an error;
- an alarm;
- a pre-emption.

3. The method according to any of the preceding claims, wherein the network comprises at least one of the following:
- an optical network;
- an IP network;
- an Ethernet;
- an Automatic Switched Transport Network.

4. The method according to any of the preceding claims, wherein said connection comprises a label switched path.

5. The method according to any of the preceding claims, wherein said method is run for several connections of the network.

6. The method according to any of the preceding claims comprising the following steps:
- a previous route for the connection is determined;
- the triggers for re-routing are determined and stored.

7. The method according to claim 6, wherein in case of pre-emption a history of paths is determined that utilize at least a portion of the connection.

8. The method according to any of the preceding claims utilized for fault analysis.

9. The method according to any of the preceding claims utilized for traffic optimization and/or for route optimization.

10. The method according to any of the preceding claims utilized by a Network Management System.

11. A device for determining a history of a connection in a network comprising a processor unit that is arranged such that the method according of any of the preceding claims is executable on said processor unit.

12. The device according to claim 11, wherein said device is a communication device, in particular a network element and/or a device comprising a NMS functionality.

13. Communication system comprising the device according to any of claims 11 or 12.
